# EUROPEAN PATENT APPLICATION

(11) **EP 1 174 803 A2**
(43) Date of publication of application: **23.01.2002**
(21) Application number: 01116712.9
(22) Date of filing: 17.07.2001
(51) Int. Cl.: G06F 17/30

(54) **System and method for realtime cross-protocol multimedia control**

(30) Priority: 18.07.2000 US 618278
(71) Applicant: Shape of Time, Inc., New York, NY 10011 (US)
(72) Inventor: Cunningham, Kevin P., New York 10011 (US); Singer, Eric L., Brooklyn, New York 11215 (US)
(74) Representative: VOSSIUS & PARTNER

(57) **Abstract**

A system and method for real-time cross-protocol multimedia control that provides integrated content, authoring and control of multiple audio, video, lighting and hardware devices. Users may schedule on the same timeline cues conforming to different protocols, and also readjust the position of the cues at runtime. The different protocols may include industry standard audio, video, and machine and device control formats, as well as network protocols enabling multiple computers to communicate with each other. The timeline also allows users to continuously monitor the labels of the cue markers as the timeline advances.

## Description

### FIELD OF THE INVENTION

The present invention relates to a method and a system for coordinating real-time cross-protocol multimedia channels.

### BACKGROUND INFORMATION

Multimedia shows and presentations in theaters, performing arts venues and centers, film sound stages, theme parks, business functions, conventions and exhibitions primarily utilize hardware-based technology. These outdated hardware-based systems often use proprietary, disparate protocols and inflexible interfaces that create inefficiencies for design and collaboration and often require extensive labor and production costs.

Conventional show production audio systems are typically mechanical sound boards operated independently of other design elements. These audio systems usually require equipment rental and several technicians to setup and interface the digital and analog components of the audio system. The setup and interfacing of the components of the audio system can be quite time consuming. Conventional video systems are constrained to single channel, poor-quality digital, or prohibitively expensive multi-channel mechanical video systems with inflexible configurations. Moreover, these hardware-based audio and video systems restrict capabilities for affordable live editing or cue timing flexibility.

In addition, lighting control systems are often rented separately and linked with other elements only through inflexible machine control languages. Device control of lighting control systems is often limited to either stand-alone "finger on the button" control or linked, inflexible machine control achieved through the light board, which also requires technicians for setup and operation.

Accordingly, there is a need for a software-based system and method that allows designers and operators to design, edit, and implement multimedia and device control cues efficiently by integrating the best industry standards for controlling multiple devices and streaming media with fluid timing and a powerful, intuitive interface.

### SUMMARY OF THE INVENTION

The present invention is a system and method for real-time cross-protocol multimedia control that provides integrated content, authoring and control of multiple audio, video, lighting and hardware devices. The present invention allows users to schedule cues conforming to different protocols on the same timeline, while also allowing users to readjust the position of the cues at runtime. The different protocols may include, for example, industry standard audio, video, machine and device control formats, as well as network protocols enabling multiple computers to communicate with each other. The present invention also allows users to continuously monitor labels of cue markers as the timeline advances.

### BRIEF DESCRIPTION OF THE DRAWINGS

FIG. 1 illustrates a control computer in accordance with an exemplary embodiment of the present invention.
FIG. 2 illustrates a communication architecture in accordance with an exemplary embodiment of the present invention.
FIG. 3 illustrates a pre-runtime timeline in accordance with an exemplary embodiment of the present invention.
FIG. 4 is a flowchart of steps for adding a cue to a timeline in accordance with an exemplary embodiment of the present invention.
FIG. 5 is a flowchart of steps for executing cross-protocol multi-media cues in accordance with an exemplary embodiment of the present invention.
FIG. 6 illustrates a timeline during runtime in accordance with an exemplary embodiment of the present invention.
FIG. 7 illustrates components for a multi-media control graphical user interface in accordance with an exemplary embodiment of the present invention.
FIG. 8 is a flow chart of steps for collecting and storing cue information in a scheduling template organizer in accordance with an exemplary embodiment of the present invention.
FIG. 9 illustrates a timeline utilizing sticky marker labels in accordance with an exemplary embodiment of the present invention.
FIG. 10 illustrates a timeline utilizing sticky marker labels in accordance with an exemplary embodiment of the present invention.
FIG. 11 illustrates a timeline utilizing sticky marker labels in accordance with an exemplary embodiment of the present invention.
FIG. 12 illustrates a timeline utilizing sticky marker labels in accordance with an exemplary embodiment of the present invention.
FIG. 13 illustrates a timeline utilizing sticky marker labels in accordance with an exemplary embodiment of the present invention.
FIG. 14 is a flow chart of steps for implementing sticky marker labels in accordance with an exemplary embodiment of the present invention.

### DETAILED DESCRIPTION

### INFRASTRUCTURE

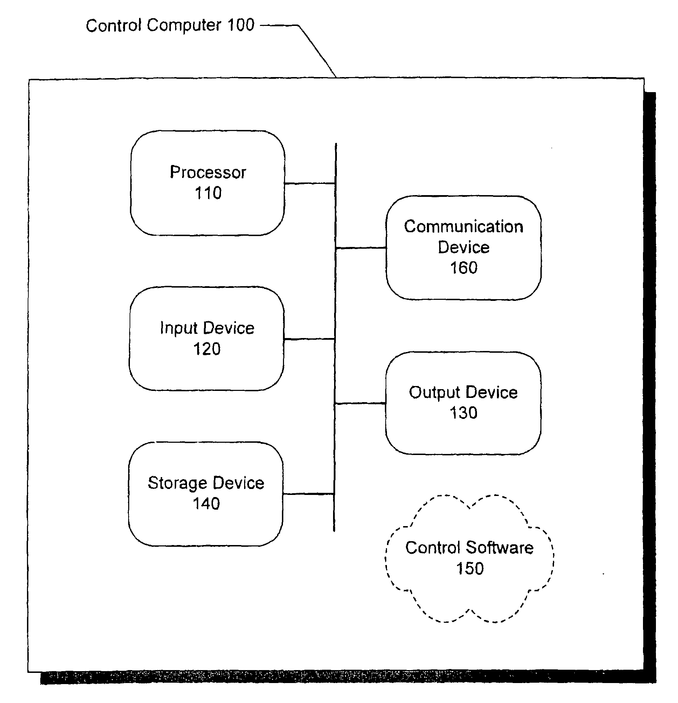

FIG. 1 illustrates the internal structure of control computer 100 in accordance with an exemplary embodiment of the present invention. Control computer 100 may be a personal computer, handheld personal digital assistant ("PDA"), or any other type of microprocessor-based device. Control computer 100 may include processor 110, input device 120, output device 130, storage device 140, and communication device 160. Processor 110 may include any microprocessor, such as the POWERPC(TM) or PENTIUM(TM) microprocessors. Input device 120 may include a keyboard, mouse, pen-operated touch screen, voice-recognition device, or any other device that provides input from a user. Output device 130 may include a monitor, printer, disk drive, speakers, or any other device that provides tangible output to a user. Storage device 140 may include volatile data storage, such as RAM, caches, or any storage medium that temporarily holds data while it is being processed, and nonvolatile data storage, such as a hard drive, CD-ROM drive, tape drive, removable storage disk, or any other non-temporary storage medium. Control software 150 may reside in storage device 140, and may be based upon any programming language, including C, C++ and JAVA(TM). Communication device 160 may include a modem, network interface card, or any other device capable of transmitting and receiving signals over a network. One skilled in the art would appreciate that the components of control computer 100 may also be connected wirelessly, possibly through an infrared connection.

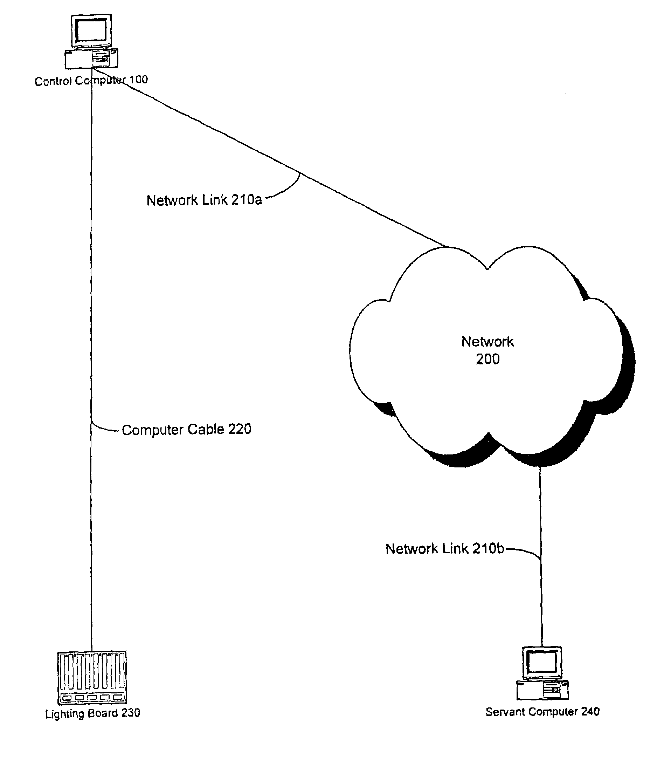

FIG. 2 illustrates a communication architecture between control computer 100 and any number of external machines or devices, such as lighting board 230, and other computers, such as servant computer 240, in accordance with an exemplary embodiment of the present invention. According to one embodiment, control software 150 on control computer 100 communicates with lighting board 230 and servant computer 240 via communication device 160, computer cable 220, network link 210a, network 200, and network link 210b. Computer cable 220 may include, for example, any cable or arrangement that connects external machines or devices with control computer 100, and network link 210 may include, for example, telephone lines, DSL (Digital Subscriber Line), cable networks, T1 or T3 lines, wireless connections, or any other arrangement that allows for the transmission and reception of network or data signals. Network 200 may include any computer network, such as a wide-area network (WAN) (i.e., the Internet) and local-area network (i.e., an intranet). It should be noted that, technically, control computer 100, servant computer 240 (which is structurally equivalent to control computer 100), network links 210, and any intermediate network components, including Internet Service Providers and routers (not shown), are also part of network 200 because of their connectivity. Network 200 may implement any number of communications protocols, including, for example, TCP/IP (Transmission Control Protocol/Internet Protocol) and UDP (User Datagram Protocol). One skilled in the art would appreciate that external machines and devices, such as lighting board 230, may be connected to control computer 100 through network 200, and that servant computer 240 may be connected to control computer 100 through computer cable 220.

### CONTROL SYSTEM

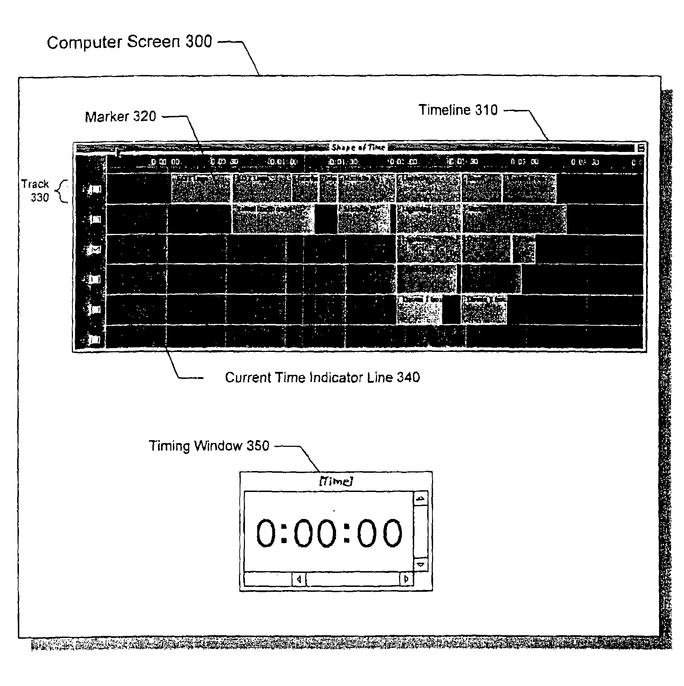

FIG. 3 illustrates computer screen 300 of control computer 100 displaying timeline 310 and timing window 350 in accordance with an exemplary embodiment of the present invention. Timeline 310, which is constructed using standard graphical user interface techniques, is a visual representation of the cross-protocol multi-media control of the present invention. Timeline 310 includes six tracks 330, which represents individual channels within which to arrange cues. Cues are events to be executed at a specific future time, and are visually represented by markers 320 on timeline 310. When control software 150 places timeline 310 in motion, current time indicator line 340 sweeps along timeline 310 (or, as in the present embodiment, tracks 330 sweep to the left as current time indicator line 340 remains stationary), and the crossing of any marker 320 by current time indicator line 340 is a visual representation of the execution of the cued event associated with the crossed marker 320. The length of marker 320 may represent the duration of certain events, such as audio and video events, or be a standard default length. Current time indicator line 340 in FIG. 3 is aligned at time zero (specifically, 0h00m00s on timeline 310), which is reflected by timing window 350.

Markers 320 on timeline 310 may represent any type of cue. Cues, among others, may include audio events, video events, machine and device control events (i.e., lighting cues), and network data events. Audio events may include the output of audio in formats such as AIFF, WAV, QUICKTIME(TM), SOUND DESIGNER II(TM), and MP3(TM). Video events may include the output of video in formats such as QUICKTIME(TM), MPEG(TM), AVI, and Progressive Video. Machine control events may include the control of stage mechanical devices, such as movement of large mechanical set-pieces and precision-controlled rigging systems, along with DVD(TM) and videodisc control. The format of serial machine control may include SMPTE, MIDI Machine Control, and DMX. Serial device control may include the control of ETC(TM), MARTIN(TM), and STRAND(TM) light boards via MIDI. Network data events may include sending a list of commands to other computers via a protocol such as HTTP, FTP, TELNET, or custom protocols. These commands may enable web-serving control of networking applications, such as web browsers and software synthesizers, on remote platforms (i.e., servant computer 240).

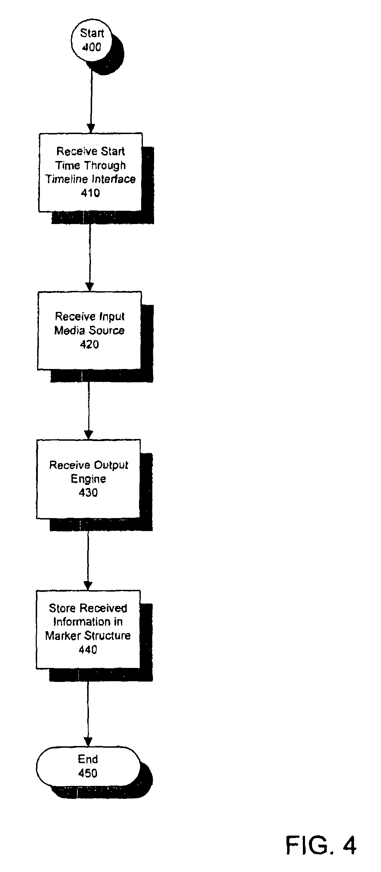

FIG. 4 is a flowchart of steps for adding a cue to timeline 310 in accordance with an exemplary embodiment of the present invention. When a user of the system wishes to place a cue on timeline 310 (step 400), the user clicks at a specific time position on a specific track 330 representing when the cue will be started (step 410). Control software 150 invokes a window allowing the user to enter the media source (step 420) and associated output engine (step 430) for the cue. In selecting the media source, the users may provide audio or video files, command files for machine or device control as well as remote application control, or user selected or edited commands for machine, device or network control. Control software 150 associates the media source with the corresponding output engine that executes the media source. Output engines may be any software, hardware, and/or firmware component that runs audio or video files, as well as sends machine control, device control, and network commands to their appropriate destination. Different media sources may travel to different destinations, through different channels, ports, etc. Control software 150 may also allow users to provide any additional parameters to customize each cue, such as ending time (e.g., cue could contain two seconds worth of a thirty second clip).

Control software 150 next stores the received information in a marker structure (step 440). A marker structure based on the C programming language may look like the following, according to one embodiment of the present invention:

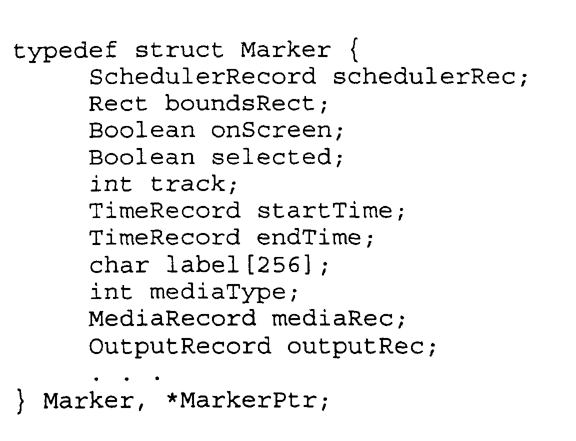

In this marker structure, the "schedulerRec" variable of type "SchedulerRecord" contains synchronization information needed to schedule cues based on a real-time system timing reference. The "boundsRect" variable of type "Rect" contains the rectangular coordinates needed for drawing each marker 320 on timeline 310. These coordinates continually change as each marker 320 advances across timeline 310. The "onScreen" variable is a Boolean value indicating whether each marker 320 is visible (i.e., within the time period and track(s) currently displayed by timeline 310). The "selected" variable is a Boolean value indicating whether each marker 320 is currently selected (i.e., chosen by the user to be edited by, for example, moving and/or modifying the marker structure). The "track" variable is an integer indicating the track 330 in which the associated marker 320 is located. The "startTime" variable is a time record storing information that indicates the start time of each marker 320. The "endTime" variable is a time record storing information that indicates the ending time of each marker 320. The ending time of each marker 320 may be determined from media or data dependent information, including file size and user-entered ending times. The "label" array is a character string representing the label associated with each marker 320. The "mediaType" variable is an enumerated value that indicates the type of media or data to which each marker 320 refers. The "mediaRec" variable is a media record storing information that describes the media source (i.e., data, file(s), media-specific parameters, etc.) associated with each marker 320. The "outputRec" variable is an output record storing information that indicates and describes the output engine associated with each marker 320. The process of adding a cue to timeline 310 terminates in step 450.

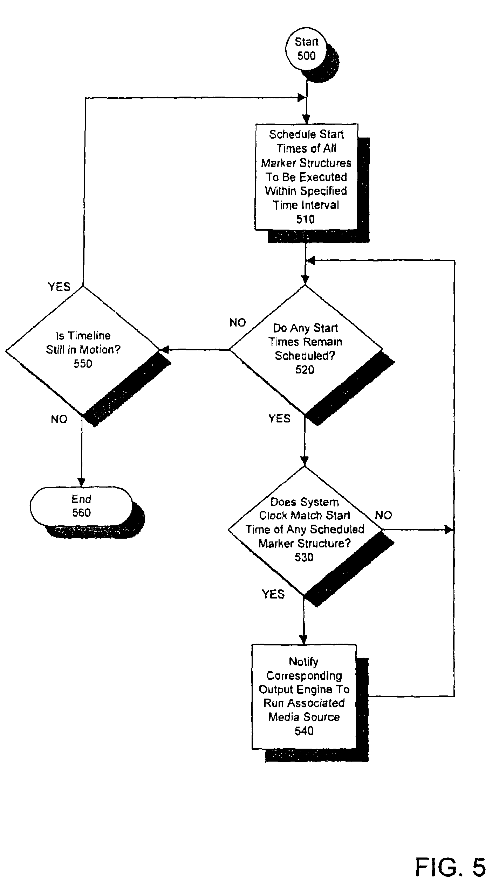

FIG. 5 is a flowchart of steps for executing cross-protocol multi-media cues in accordance with an exemplary embodiment of the present invention. When timeline 310 is set into motion (step 500), control software 150 schedules cues to be executed within a specified time interval, such as every ten seconds (step 510). This is implemented by storing into memory the start times of the corresponding marker structures to be executed within that time interval. (In alternative embodiments, cues for the entire presentation may be scheduled up front, or they may be scheduled in a specific order of execution.) As long as start times remain scheduled (step 520), control software 150 checks if the system timing reference has reached one of the stored start times (step 530). If it has, control software 150 notifies the corresponding output engine to run the associated media source (step 540) by referencing the appropriate marker structure. When no start times remain scheduled ("no" branch of step 520), control software 150 checks if timeline 310 is still in motion (step 550). If so, the cues within the subsequent specified time interval are scheduled and run. If timeline 310 is no longer in motion, the process terminates (step 560).

In an alternative embodiment, a scheduler separate from control software 150 may perform the scheduling in step 510. A scheduler is a standard software component that schedules any time-related event, such as the execution of a cue or computer screen redraws. It operates in real time and uses the system clock.

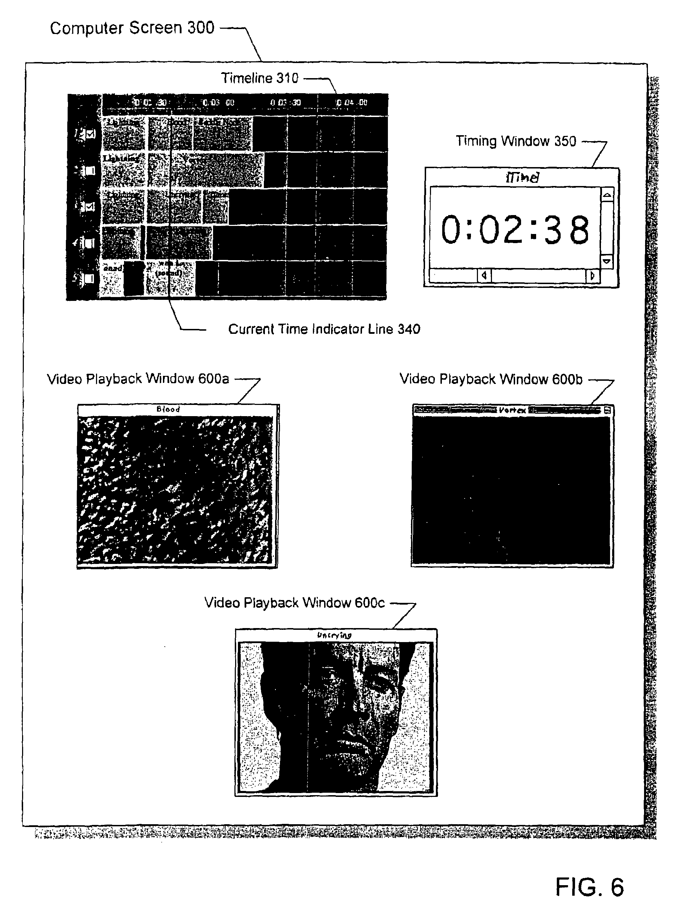

FIG. 6 illustrates timeline 310 during runtime in accordance with an exemplary embodiment of the present invention. The current execution time in FIG. 6 is two minutes and thirty-eight seconds into the program, as demonstrated by timing window 350 and current time indicator line 340. At this moment, current time indicator line 340 is passing through fives markers 320: three video markers, a device marker, and an audio marker. The first video marker, on track one, is labeled "Blood." The second video marker, on track two, is labeled "Vortex." The third video marker, on track three, is labeled "Uncrying." The device marker, on track four, is labeled "Lightning," and the audio marker, on track five, is labeled "Dewan I (sound)." Current time indicator line 340 passing through each of these markers 320 represents control software 150 executing their associated media sources, which in this embodiment are video, sound and lighting. The corresponding output engines in this embodiment are video players, audio players, and lighting boards. The output engines for the video markers are video playback windows 600a, 600b and 600c, which broadcast the media sources on computer screen 300. (In an alternative embodiment, the output engine may send video through a port of control computer 100 connected to a video projector, in order to broadcast on a video screen). Video playback window 600a shows the video playback for the "Blood" video marker, which depicts blood on a carpet. Video playback window 600b shows the video playback for the "Vortex" video marker, which depicts a whirling vortex. And video playback window 600c shows the video playback for the "Uncrying" video marker, which depicts a man crying in reverse motion. Control software 150 executes the cue associated with device marker "Lightning" by sending MIDI control signals to a lighting board to flash physical lights, and the cue associated with audio marker "Dewan I (sound)" causes an audio player to play the sound of booming thunder to accompany the flashing lights.

Any marker 320 may be moved to another location in timeline 310 during execution of the program; control software 150 implements this by resetting the position and timing information in the associated marker structure. If a moved marker is to be executed within the time interval currently scheduled, then control software 150 stores the new start time for the moved marker into memory and execution of cues resumes as planned.

In alternative embodiments to theatre and show control, control software 150 has application for digital asset management and for webcasting. Control software 150 can be used for the scheduling and delivery of content (including data) from a provider (e.g., design firm, web studio, cross-protocol data archiver) to a user (e.g., advertising agency, webzine, individual or corporate client), and for any kind of multi-protocol communication, specifically for the coordination of multiple channels of data scheduled to arbitrary accuracy over network 200 (e.g. financial data and news media).

### GRAPHICAL USER INTERFACE

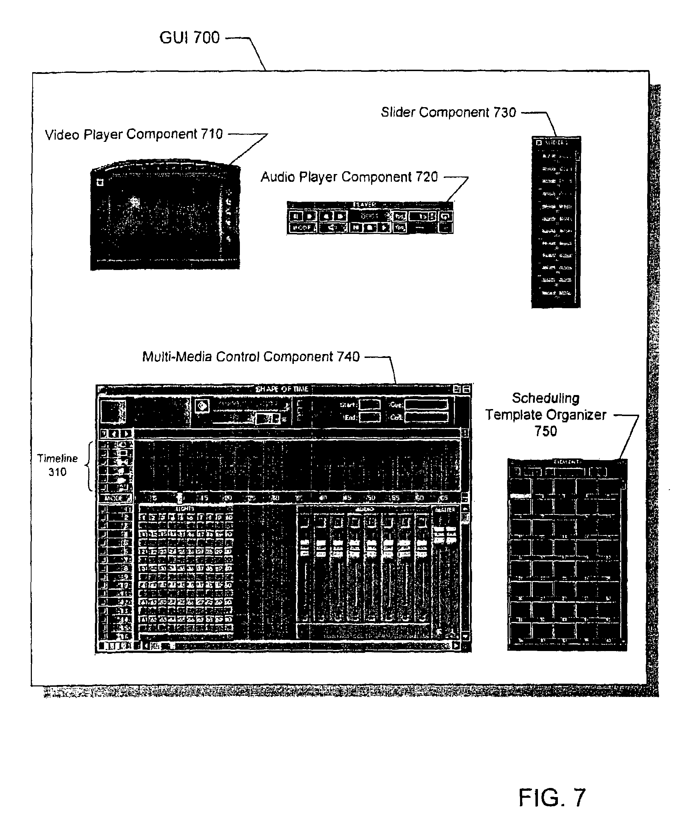

FIG. 7 illustrates components for a multimedia control graphical user interface (GUI) in accordance with an exemplary embodiment of the present invention. GUI 700 includes video player component 710, audio player component 720, slider component 730, multimedia control component 740, and scheduling template organizer 750. Video player component 710 represents an output engine for any type of video file, while audio player component 720 represents an output engine for any type of audio file. Slider component 730 allows a user to assign a slider, ranging from zero to one hundred, for example, to an output engine or device to vary its properties during the execution of timeline 310. These properties include, for example, rate, fade time, pitch, speed and intensity. Multimedia control component 740 includes timeline 310 at the top of the window and lighting and audio controls at the bottom. While timeline 310 is running, a user could manually control lights and audio using multimedia control component 740. Scheduling template organizer 750 can store marker arrangements from timeline 310 for future use.

If a user likes the arrangement of cues represented by markers 320 (not shown) in multi-media control component 740, the user can select any portion of the markers 320 and drag them over to scheduling template organizer 750, depositing the arrangement in one of its boxes. In this manner, the user at a future date may access a past marker arrangement stored in scheduling template organizer 750, and incorporate it into a new timeline 310 by dragging it to the desired location on timeline 310.

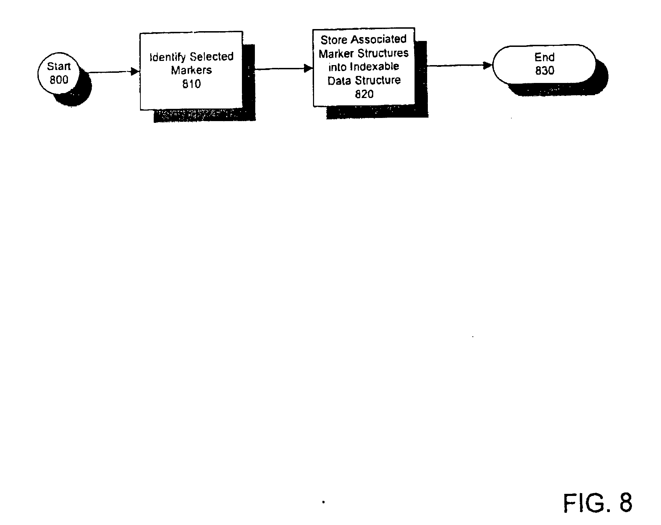

FIG. 8 is a flow chart of steps for collecting and storing cue information in scheduling template organizer 750 in accordance with an exemplary embodiment of the present invention. After the user selects a marker configuration from timeline 310 (step 800), control software 150 identifies the selected markers 320 (step 810). This is implemented by storing a "TRUE" value for the "selected" variables in the appropriate marker structures. Control software 150 stores the marker structures associated with the selected markers 320 into an indexable data structure, such as an array (step 820). Scheduling template organizer 750 thus represents an array of a collection of marker structures (or, technically, an array of an array of marker structures) from which users may choose content, timing, and/or effects at a future date (step 830). Users, through scheduling template organizer 750, may add, delete, or modify any parameters of the cues represented by these marker structures.

### STICKY MARKER LABELING

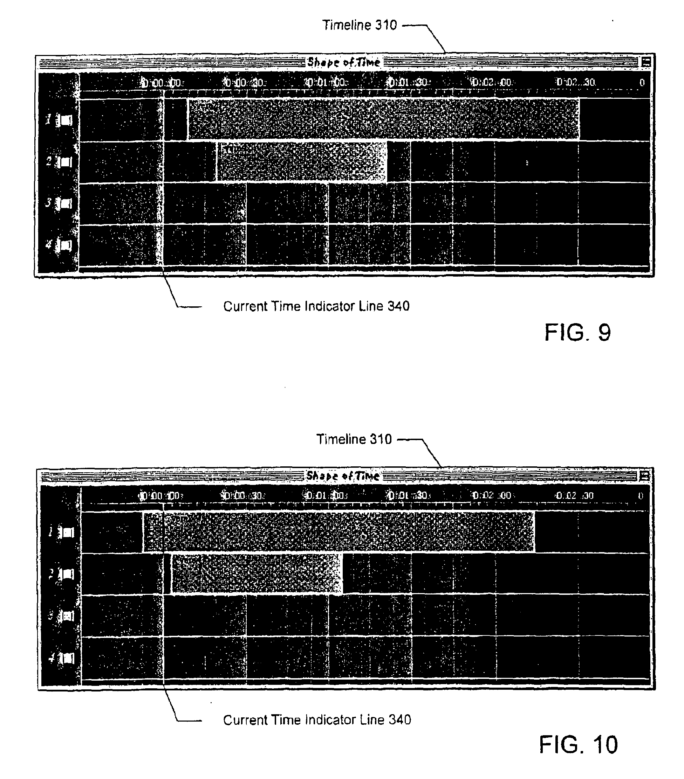

FIGS. 9-13 illustrate a running timeline 310 utilizing sticky marker labels in accordance with an exemplary embodiment of the present invention. A marker label includes any text, symbol or graphic, such as a thumbnail or icon. A sticky marker label allows the user to continuously view a marker label on its associated marker 320, even when a portion of the marker 320 advances beyond the viewable timeline 310 region. In standard timelines 310, marker labels are left justified within the marker 320, as shown in FIG. 9. As these timelines 310 advance to the left, the marker labels run off the viewable area of the timelines 310, leaving the user to wonder what description was associated with the blank markers 320 remaining on the timelines 310.

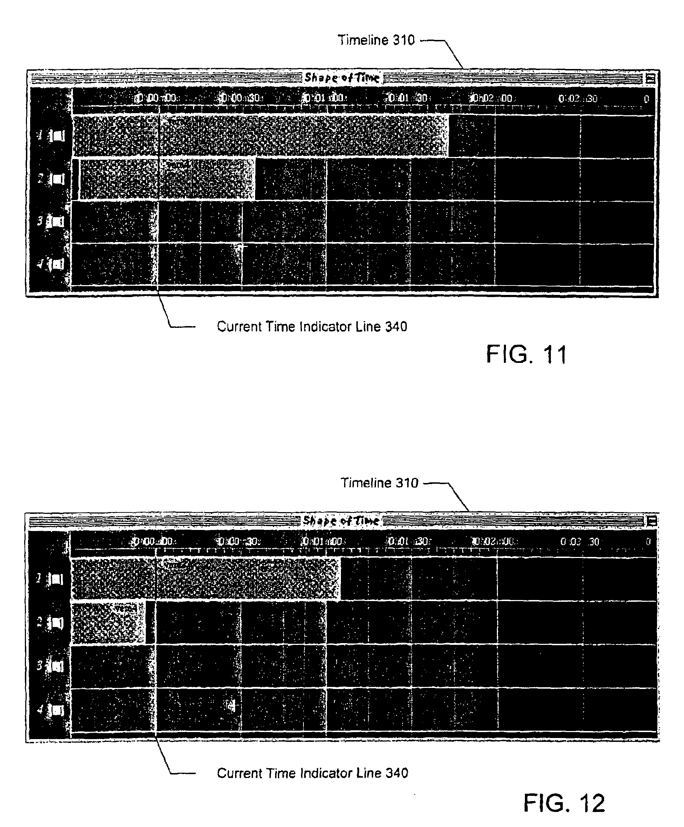

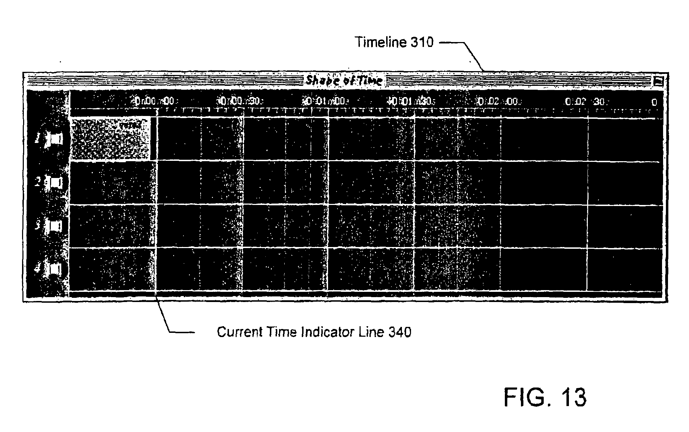

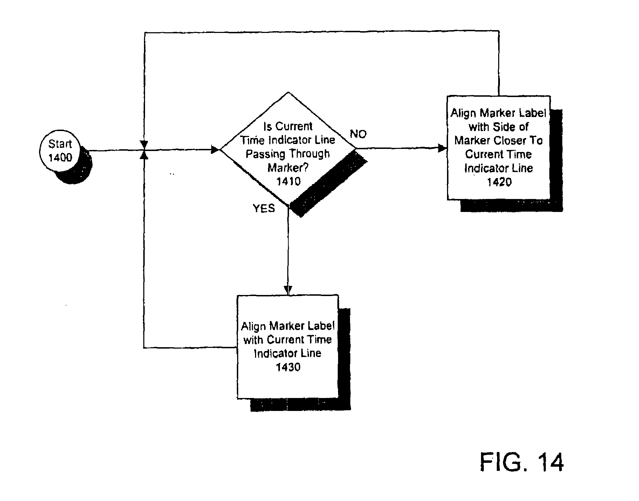

FIG. 14 is a flow chart of steps for implementing sticky marker labels in accordance with an exemplary embodiment of the present invention. After control software 150 sets the timeline 310 in motion (step 1400), it checks if current time indicator line 340 is passing through each marker 320 by checking the "startTime" and "endTime" variables of each associated marker structure (step 1410). If the start time is to the right of current time indicator line 340 ("no" branch of step 1410), the marker structure has not been executed and control software 150 aligns the marker label with the left side of the associated marker 320 (step 1420), as shown in FIG. 9 (tracks one and two) and FIG. 10 (track two). If current time indicator line 340 is between the start time and the end time of an associated marker structure ("yes" branch of step 1410), the marker structure is executing and control software 150 left justifies the marker label with current time indicator line 340 (step 1430), as shown in FIG. 10 (track one), FIG. 11 (tracks one and two) and FIG. 12 (track one). (Note that in step 1430, once the marker label reaches the right side of the associated marker 320, it ceases moving with current time indicator line 340.) Finally, if the end time is to the left of current time indicator line 340, the marker structure has completed execution and control software 150 right justifies the marker label in the associated marker 320 (step 1420), as shown in FIG. 12 (track two) and FIG. 13 (track one). This process continues for as long as timeline 310 is set to run.

Several embodiments of the present invention are specifically illustrated and/or described herein. However, it will be appreciated that modifications and variations of the present invention are covered by the above teachings and within the purview of the appended claims without departing from the spirit and intended scope of the present invention.

## Claims

1. A method for controlling cross-protocol multi-media events through a graphical user interface, comprising the steps of:
(a) scheduling in real time a plurality of multi-media events; and
(b) executing the scheduled events.

2. The method according to claim 1, wherein the plurality of multi-media events includes at least one of an audio event, a video event, a machine control event, a device control event, and a network data event.

3. The method according to claim 1 or 2, wherein the executing step (b) includes sending the plurality of multi-media events to different output destinations.

4. The method according to any of claims 1 to 3, wherein the scheduling step (a) includes the substeps of:
(i) receiving a start time for each multi-media event,
(ii) receiving an input media source for each multi-media event,
(iii) receiving an output engine for each multi-media event, and
(iv) storing the received information for each multi-media event in a marker structure.

5. The method according to claim 4, wherein the executing step (b) includes the substeps of:
(v) checking the start times stored in each marker structure, and
(vi) if a system timing reference matches the start time stored in any marker structure, for each matched marker structure, notifying the corresponding output engine to run the associated media source.

6. A computer arrangement for controlling cross-protocol multi-media events through a graphical user interface, comprising:
a storage device; and
a processor scheduling in real time a plurality of multi-media events in the storage device, the processor executing the scheduled events.

7. The computer arrangement according to claim 6, wherein the plurality of multi-media events includes at least one of an audio event, a video event, a machine control event, a device control event, and a network data event.

8. The computer arrangement according to claim 6 or 7, wherein the processor sends the plurality of multi-media events to different output destinations.

9. The computer arrangement according to any of claims 6 to 8,
wherein the processor receives a start time for each multi-media event,
wherein the processor receives an input media source for each multi-media event,
wherein the processor receives an output engine for each multi-media event, and
wherein the processor stores in the storage device the received information for each multi-media event in a marker structure.

10. The computer arrangement according to claim 9,
wherein the processor checks the start times stored in each marker structure, and
wherein if a system timing reference matches the start time stored in any marker structure, for each matched marker structure, the processor notifies the corresponding output engine to run the associated media source.

11. A method for organizing a configuration of multi-media events through a graphical user interface, comprising the steps of:
(a) for each multi-media event, receiving a marker structure, the marker structure including a timing information, an input media source, and an output engine; and
(b) storing the marker structures into an indexable data structure.

12. The method according to claim 11, wherein each multi-media event includes at least one of an audio event, a video event, a machine control event, a device control event, and a network data event.

13. A computer system for controlling cross-protocol multi-media events through a graphical user interface, comprising:
a storage device; and
for each multi-media event, a processor receiving a marker structure, the marker structure including a timing information, an input media source, and an output engine, the processor storing the marker structures into an indexable data structure in the storage device.

14. The computer system according to claim 13, wherein each multi-media event includes at least one of an audio event, a video event, a machine control event, a device control event, and a network data event.

15. A method for continuously displaying a label of a marker in a viewable region of an advancing timeline, the timeline including a current time indicator line, comprising the steps of:
(a) if the current time indicator line is not passing through the marker, aligning the label of the marker with a side of the marker closer to the current time indicator line;
(b) if the current time indicator line is passing through the marker, aligning the label of the marker with the current time indicator line.

16. A computer for continuously displaying a label of a marker in a viewable region of an advancing timeline, the timeline including a current time indicator line, comprising:
a storage device; and
if the current time indicator line is not passing through the marker, a processor aligning the label of the marker with a side of the marker closer to the current time indicator line, if the current time indicator line is passing through the marker, the processor aligning the label of the marker with the current time indicator line.

17. A computer-readable storage medium storing a set of instructions, the set of instructions capable of being executed by a processor to control cross-protocol multi-media events through a graphical user interface, the set of instructions performing the steps of:
(a) scheduling in real time a plurality of multi-media events; and
(b) executing the scheduled events.

18. A computer data signal embodied in a carrier wave to control cross-protocol multi-media events through a graphical user interface, the computer data signal comprising:
(a) a scheduling source code segment scheduling in real time a plurality of multi-media events; and
(b) an executing source code segment executing the scheduled events.

19. A computer-readable storage medium storing a set of instructions, the set of instructions capable of being executed by a processor to organize a configuration of multi-media events through a graphical user interface, the set of instructions performing the steps of:
(a) for each multi-media event, receiving a marker structure, the marker structure including a timing information, an input media source, and an output engine; and
(b) storing the marker structures into an indexable data structure.

20. A computer data signal embodied in a carrier wave to organize a configuration of multi-media events through a graphical user interface, the computer data signal comprising:
(a) for each multi-media event, a receiving source code segment receiving a marker structure, the marker structure including a timing information, an input media source, and an output engine; and
(b) a storing source code segment storing the marker structures into an indexable data structure.

21. A computer-readable storage medium storing a set of instructions, the set of instructions capable of being executed by a processor to continuously display a label of a marker in a viewable region of an advancing timeline, the timeline including a current time indicator line, the set of instructions performing the steps of:
(a) if the current time indicator line is not passing through the marker, aligning the label of the marker with a side of the marker closer to the current time indicator line;
(b) if the current time indicator line is passing through the marker, aligning the label of the marker with the current time indicator line.

22. A computer data signal embodied in a carrier wave to continuously display a label of a marker in a viewable region of an advancing timeline, the timeline including a current time indicator line, the computer data signal comprising:
(a) if the current time indicator line is not passing through the marker, an aligning source code segment aligning the label of the marker with a side of the marker closer to the current time indicator line;
(b) if the current time indicator line is passing through the marker, an aligning source code segment aligning the label of the marker with the current time indicator line.
